# EUROPEAN PATENT APPLICATION

(11) **EP 4 800 185 A1**
(43) Date of publication of application: **02.09.2026**
(21) Application number: 24882135.7
(22) Date of filing: 04.10.2024
(51) Int. Cl.: E01D 22/00, B32B 27/00, E01C 23/00, E04G 23/02

(54) **MATERIAL AND METHOD FOR REINFORCING ARCHITECTURAL STRUCTURE**

(30) Priority: 27.10.2023 JP 2023185060
(71) Applicant: Auros Technologies LLC, Hakusan-shi, Ishikawa 920-2103 (JP)
(72) Inventor: WADA, Michiaki, Hakusan-shi, Ishikawa 920-2103 (JP)
(74) Representative: Gulde & Partner
(86) International application number: PCT/JP2024/035693
(87) International publication number: WO 2025/089018

(57) **Abstract**

[Means for Resolution] A material (1) that consists of an adhesive (2) and a reinforcement sheet (3) and is used for reinforcing a building (4). A method (10) using the material (1). The adhesive (2) is a two-component epoxy-based adhesive having a compressive elastic modulus in accordance with JIS A 6024 of 500 MPa or less. The reinforcement sheet (3) consists of an engineering plastic and carbon fibers, and at least one surface of the reinforcement sheet (3) exhibits a water contact angle of 50 degrees or less.

## Description

### [Technical Field]

The present invention relates to a method for reinforcing a building. Specifically, the present invention relates to a method for reinforcing a building such as a bridge using a specific building reinforcement material. In addition, the present invention relates to a building reinforcement material, which is used in the above-mentioned reinforcement method.

### [Background Art]

Deterioration over time such as cracking and peeling of concrete surfaces in buildings such as bridges and roads is unavoidable. Deteriorating buildings should be repaired periodically. In the related art, a repair method has been adopted in which a deteriorated building surface is protected with a reinforcement material.

An example of a method for reinforcing a building described in Patent Document 1 includes a step in which an elastic layer is formed on a surface of a building, and an impregnation step in which an epoxy-based adhesive is applied onto the elastic layer to impregnate a fiber sheet, which is made by aligning reinforcement fibers in one direction, with epoxy resin, thereby resulting in bonding of the fiber sheet to the elastic layer. In a case where this reinforcing method is adopted, a fiber sheet is impregnated with epoxy resin at the site of work, which requires careful rolling and curing.

The method for reinforcing a building described in Patent Document 2 requires a step of applying a curable polymer onto a surface of a building, a step of curing the curable polymer to form a first layer, a step of heating an open surface of the first layer, and a step of bonding a second layer containing reinforcing fibers and a thermoplastic matrix to the surface of the first layer after the heating. In such a reinforcement method, it is necessary to heat the surface of the cured first layer at the site of work, which requires a lot of equipment and labor.

The applicant has proposed in Patent Document 3 a special reinforcement sheet that can simplify the repair method for a concrete building in the related art as described above. The building reinforcement sheet described in Patent Document 3 consists of a prepreg containing carbon fibers and an engineering plastic consisting of one or more selected from a polyphenylene sulfide resin, a polycarbonate, and a polyether ether ketone, and has at least one surface that exhibits a water contact angle of 50 degrees or less. In a case of reinforcing a building, the above-mentioned building reinforcement sheet is bonded to a surface of the building through a curable adhesive.

Patent Document 3 describes that the reinforcing effect of the above-mentioned building reinforcement sheet was evaluated by a bond test in accordance with JSCE-E 545-2018, a tensile test in accordance with JSCE-E 541-2013, and a joint test in accordance with JSCE-E 542-2018. The joint test is a test in which end portions of two of the reinforcement sheets are bonded to each other to form an overlapping portion (joint) of the sheets, and the resistance to peeling of the overlapping portion is measured as a bond strength. Patent Document 3 describes that the reinforcement sheet in which the end portions overlap (the end portions are joined) with each other exhibits a high bond strength in the joint test.

For example, reinforcement work of a bridge may involve reinforcement of a floor slab ranging from several tens square meters to several hundreds square meters. It is difficult to prepare and transport a reinforcement sheet in advance in an area that covers the entire reinforcement surface, so a plurality of reinforcement sheets for buildings having a certain area are usually prepared and joined together on a floor slab surface to be reinforced to reinforce the entire area of work.

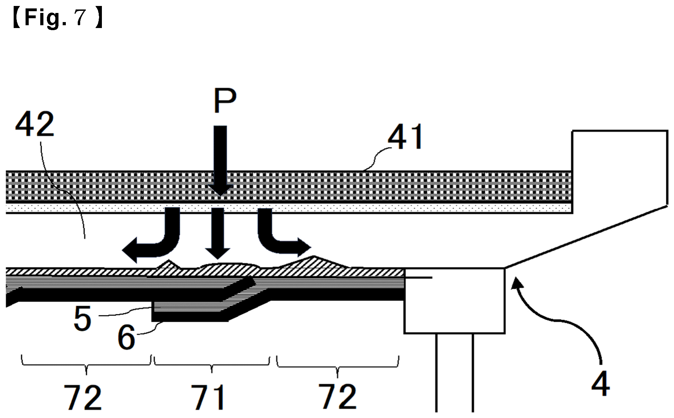

Fig. 7 shows a state where the underside of a floor slab (42) of a bridge (4) is reinforced with a reinforcement sheet (6). Fig. 7 is a view in which actual dimensions and shapes are exaggerated and omitted. In a case where the reinforcement sheet described in PTL 3 is used, the reinforcement sheet (6) is bonded to the flattened floor slab (42) through an adhesive (5). At the time of covering, two reinforcement sheets (6) are joined together.

Basically, at a joint portion (71), two layers of the reinforcement sheet (6) and two layers of the adhesive (5) are superimposed on the floor slab (42), and at a non-joint portion (72), one layer of the reinforcement sheet (6) and one layer of the adhesive are superimposed on the floor slab (42). As a result, two types of structural portions, that is, the joint portion (71) and the non-joint portion (72) are formed on the floor slab (42) after the reinforcement. The load P applied to the bridge is basically directed from a pavement (41) side toward the reinforcement sheet (6) under the floor slab (42) (shown diagrammatically by arrows. The arrows do not represent the reproduction of the actual direction of the force). In the bridge (4) after the reinforcement, the portion covered with the reinforcement sheet (6) is a portion that ultimately resists the load P.

The resistance (strength) of the floor slab after the reinforcement against an external force such as impact force, twisting, or pressing force applied to the bridge is greatly affected not only by the internal and external structures of the floor slab portion (presence or absence of cracking, and surface unevenness), but also by the close contact state of the floor slab and the reinforcement sheet and any damage to the reinforcement sheet. Therefore, the behavior of the joint portion (71) and the non-joint portion (72) in a case where the actual floor slab (42) is subjected to a load cannot be predicted solely by the bond strength between the reinforcement sheets (6).

In the reinforcement of the bridge floor slab, it is required that equally high strength be obtained at the joint portion, the non-joint portion, and the boundary portion between the joint portion and the non-joint portion. However, the above-mentioned "equally high strength" required in the actual building reinforcement is not directly supported by the bond strength between the reinforcement sheets. In order to use the reinforcement sheet described in Patent Document 3 in actual reinforcement work for the actual building reinforcement work, it is necessary to consider a more realistic usage of the reinforcement sheet.

### [Related art Document]

### [Patent Document]

[Patent Document 1] Japanese Patent No. 5380551
[Patent Document 2] Japanese Patent No. 6043485
[Patent Document 3] Japanese Patent Application No. 2022-183616

### [Summary of the Invention]

### [Problem that the Invention is to Solve]

In Japan, there is a shortage of civil engineering workers due to the declining birthrate and aging population, and many of the buildings such as bridges and roads are reaching the period of repair at the same time, so there is a strong need to simplify methods for reinforcing buildings using reinforcement fiber materials. However, any reduction in the reinforcing effect due to the simplification of the method is unacceptable.

### [Means for solving the problem]

The present inventors have investigated a usage of a building reinforcement sheet developed by the present inventors themselves, which is expected to be effective in actual reinforcement of buildings. The present inventors have sought a usage of the above-mentioned reinforcement sheet, which does not cause the joint of the reinforcement sheet to reduce the reinforcing effect, and which allows reinforcement work to be carried out with simpler operations. As a result, the present inventors have found that a building reinforcement material in which the above-mentioned building reinforcement sheet is combined with a specific adhesive is effective. Further, the present inventors have also found that the work of the reinforcement work in the related art can be simplified by using this building reinforcement material. That is, the present invention is as follows.

### (Invention 1)

A material (1) including an adhesive (2) and a reinforcement sheet (3), and used for reinforcing a building (4), in which the adhesive (2) is a two-component epoxy-based adhesive having a compressive elastic modulus in accordance with JIS A 6024 of 500 MPa or less, the reinforcement sheet (3) consists of carbon fibers and an engineering plastic consisting of one or more selected from a polyphenylene sulfide resin, a polycarbonate, and a polyether ether ketone, and at least one surface of the reinforcement sheet (3) exhibits a water contact angle of 50 degrees or less.

### (Invention 2)

The material (1) according to Invention 1, in which a compressive strength in accordance with JIS A 6024 (method A) of the adhesive (2) is 70 MPa or less.

### (Invention 3)

The material (1) according to Invention 1, in which the adhesive (2) contains a polyamide-based curing agent.

### (Invention 4)

The material (1) according to Invention 1, in which the reinforcement sheet (3) consists of a polyphenylene sulfide resin and carbon fibers having a basis weight of 150 g/m² or more, and at least one surface of the reinforcement sheet (3) is hydrophilized by a plasma treatment such that a water contact angle of 50 degrees or less is exhibited.

### (Invention 5)

The material (1) according to Invention 1, in which the building (4) is a bridge.

### (Invention 6)

A method (10) for reinforcing a building, the method including a step of fixing a reinforcement sheet (3) to a surface of a building (4) through an adhesive (2), in which the adhesive (2) is a two-component epoxy-based adhesive having a compressive elastic modulus in accordance with JIS A 6024 of 500 MPa or less, the reinforcement sheet (3) consists of carbon fibers and an engineering plastic consisting of one or more selected from a polyphenylene sulfide resin, a polycarbonate, and a polyether ether ketone, and at least one surface of the reinforcement sheet (3) exhibits a water contact angle of 50 degrees or less.

### (Invention 7)

The method (10) according to Invention 6, in which a compressive strength in accordance with JIS A 6024 (method A) of the adhesive (2) is 70 MPa or less.

### (Invention 8)

The method (10) according to Invention 6, in which the adhesive (2) contains a polyamide-based curing agent.

### (Invention 9)

The method (10) according to Invention 6, in which the reinforcement sheet (3) consists of a polyphenylene sulfide resin and carbon fibers having a basis weight of 150 g/m² or more, and at least one surface of the reinforcement sheet (3) is hydrophilized by a plasma treatment such that a water contact angle of 50 degrees or less is exhibited.

### (Invention 10)

The method (10) according to Invention 6, in which the building (4) is a bridge.

### [Advantage of the Invention]

A building reinforced with the material (1) of the present invention has a high reinforcing effect regardless of the disposition of joints. The method (10) of the present invention can shorten the reinforcement work.

### [Brief Description of the Drawings]

Fig. 1 shows a state of bridge repair using the present invention.
Fig. 2 shows a test specimen made of reinforced concrete used in the evaluation of the present invention.
Fig. 3 shows a test specimen made of reinforced concrete used in the evaluation of the present invention.
Fig. 4 shows a state of a loading test for evaluating the present invention.
Fig. 5 shows a state of a loading test for evaluating the present invention.
Fig. 6 shows a state of a loading test for evaluating the present invention.
Fig. 7 shows a state of a reinforced bridge.

Each of the drawings is a reference drawing for understanding the works and tests related to the present invention. The shapes and dimensions shown in each of the drawings are exaggerated or omitted.

### [Best Mode for Carrying Out the Invention]

### [Material (1)]

The material (1) according to an embodiment of the present invention consists of an adhesive (2) and a reinforcement sheet (3), and is used for reinforcing a building (4).

### [Adhesive (2)]

The adhesive (2) is a two-component adhesive containing an epoxy-based main agent. Examples of the epoxy-based main agent include an epoxy resin having at least two or more epoxy groups in a molecule, such as a bisphenol A type epoxy resin, a bisphenol F type epoxy resin, a bisphenol AD type epoxy resin, a bisphenol S type epoxy resin, or a hydrogenated epoxy resin thereof, a glycidyl ester type epoxy resin, a glycidyl amine type epoxy resin, an alicyclic epoxy resin, an aliphatic epoxy resin, a novolac type epoxy resin, a urethane-modified epoxy resin having a urethane bond, a fluorinated epoxy resin, a rubber-modified epoxy resin (for example, an epoxy resin modified with any rubber of polybutadiene, styrene-butadiene rubber (SBR), nitrile rubber (NBR), or CTBN), and a flame-retardant epoxy resin such as a glycidyl ether of tetrabromobisphenol A. These epoxy resins can be used alone or in combination of two or more thereof.

The compressive elastic modulus in accordance with JIS A 6024 of the adhesive (2) is 500 MPa or less, preferably 20 MPa or more and 500 MPa or less, and more preferably 20 MPa or more and 100 MPa or less. JIS A 6024 specifies a method for measuring the compressive elastic modulus of a cured product of an adhesive epoxy resin. Therefore, the compressive elastic modulus in the present invention is a compressive elastic modulus exhibited by the cured product of the adhesive (2). The same applies to the compressive strength which will be described later.

As the curing agent of the adhesive (2), a curing agent that can achieve the above-mentioned compressive elastic modulus is selected. Generally, a polyamide-based curing agent is used. As the polyamide-based curing agent, a polyamide resin used as the curing agent of an epoxy resin can be used. Such a polyamide resin is primarily a product of a condensation reaction between a dimer acid and a polyamine. The polyamide resin is typically a polyamide amine having reactive primary amine and secondary amine in a molecule.

The polyamide-based curing agent can include an additional curing agent. An amine-based compound containing a primary or secondary amine group is used as the additional curing agent. For example, the additional curing agent such as 4,7,10-trioxytridecane-1,13-diamine, 4,7-dioxydecane-1,10-diamine, diethylenetriamine, triethylenetetraamine, tetraethylenepentaamine, a higher polyalkylene polyamine, aminoethylpiperazine, or a polyethyleneimine polymer can be mixed in a ratio of 30% by weight or less with respect to the polyamide-based curing agent.

The formulating ratio of the epoxy-based main agent and the polyamide-based curing agent is not particularly limited and is determined according to the usage of a commercially available two-component adhesive. By combining the above-mentioned epoxy-based main agent and polyamide-based curing agent, the adhesive (2) exhibits physical properties different from those of a typical epoxy-based adhesive for use in building repair or building reinforcement. That is, the cured product of the adhesive (2) is softer and has better elongation than a typical epoxy resin for building repair and building reinforcement.

The compressive strength in accordance with JIS A 6024 (method A) of the adhesive (2) is preferably 70 MPa or less and more preferably 20 MPa or more and 60 MPa or less.

On the other hand, JIS A 6024 requires a compressive strength (method A) of 50 MPa or more for a putty-like epoxy resin used for repairing cracks in a building, and requires a compressive strength of 70 MPa or more and a compressive elastic modulus of 1500 MPa or more for an impregnating adhesive epoxy resin used for continuous fiber reinforcement work of a building. The cured product of the adhesive (2) used in the present invention is soft and has good elongation, unlike these general epoxy-based adhesives. Such softness and elongation are qualities that are not assumed by the epoxy resins for building repair and building reinforcement in the related art.

The adhesive (2) can further contain additives such as a curing catalyst, an adhesion accelerator, a filling material, a rheology modifier, a gelling agent, a thickener, and a pigment, which are common to an epoxy-based adhesive, as long as the performance thereof is not inhibited. Each of the additives is blended into one of the epoxy-based main agent or the curing agent, or into both of the epoxy-based main agent and the curing agent.

### [Reinforcement sheet (3)]

The reinforcement sheet (3) consists of a prepreg containing carbon fibers and an engineering plastic consisting of one or more selected from a polyphenylene sulfide resin, a polycarbonate, and a polyether ether ketone, that is, a prepreg in which an engineering plastic consisting of one or more selected from a polyphenylene sulfide resin, a polycarbonate, and a polyether ether ketone is impregnated between fibers of carbon fibers aligned in a flat long shape. In the present invention, preferably, a polyphenylene sulfide resin is used as the engineering plastic.

The reinforcement sheet (3) has at least one surface exhibiting a water contact angle of 50° or less. This means that at least one surface of the prepreg has sufficient hydrophilicity. At least one surface of the prepreg is subjected to chemical modification or plasma irradiation to generate hydrophilic groups such as -OH and -COOH on that surface of the prepreg, resulting in the expression of the hydrophilicity.

The reinforcement sheet (3) has, as its main body, a sheet in which a carbon fiber as a reinforcement material is impregnated with a resin selected from a polyphenylene sulfide resin, a polycarbonate, and a polyether ether ketone which are common as engineering plastics, and therefore has excellent mechanical strength and heat resistance. Since the reinforcement sheet (3) contains a thermoplastic resin, the reinforcement sheet (3) can also be applied to a curved surface or a fine part in a state where the flexibility is increased by heating.

Any known linear polyphenylene sulfide resin can be used without limitation as the polyphenylene sulfide resin. The "linear polyphenylene sulfide resin" is well known in the art as a representative type of polyphenylene sulfide. The linear polyphenylene sulfide resin is a linear polymer substantially consisting of p-phenylene sulfide units in which p-phenylene units and sulfide bond units are alternately bonded, and can contain a small amount of m-phenylene sulfide units as long as the polymer has a substantially linear structure. The manufacturing method of the linear polyphenylene sulfide resin is also well known. Representative industrial methods include the Phillips method which involves condensation polymerization of p-dichlorobenzene and sodium sulfide in N-methyl-2-pyrrolidone at a temperature of 200°C to 250°C, and the Dow Chemical method which involves self-condensation polymerization of p-bromthiophenylene metal salts.

Any known polycarbonate can be used without limitation as the polycarbonate. Typically, the polycarbonate is manufactured by a polycondensation reaction of bisphenol A with carbonyl chloride (phosgene method) or by a transesterification method of diphenyl carbonate.

The polyether ether ketone resin is a resin consisting of the following repeating structure. 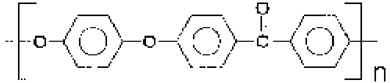 n: number of repetitions

Any carbon fiber used in fiber-reinforced plastic (FRP) can be used without limitation as the carbon fiber. Usable carbon fibers are generally a PAN-based carbon fiber and a pitch-based carbon fiber.

The ratio (by weight or volume) of polyphenylene sulfide resin to carbon fiber, the thickness of one sheet of prepreg, and the like are appropriately set within a range in which the reinforcement sheet (3) has all of tensile performance, joint performance, and bond performance which will be described later. In a case where the reinforcement sheet (3) is used for reinforcing a curved surface, the flexibility can be improved by making the sheet thinner or lowering the content of carbon fibers within a range in which the reinforcement sheet (3) has all of the above-mentioned tensile performance, joint performance, and bond performance.

From the viewpoint of the balance among the tensile performance, the joint performance, the bond performance, and the flexibility, the basis weight of carbon fibers in the reinforcement sheet (3) is generally 150 g/m² or more, preferably 150 g/m² or more and 400 g/m² or less, and more preferably 150 g/m² or more and 300 g/m² or less, and the content of carbon fibers in the reinforcement sheet (3) is 20% or more and 80% or less, preferably 30% or more and 70% or less, and more preferably 40% or more and 60% or less.

The reinforcement sheet (3) can contain another thermoplastic resin in addition to the above-mentioned polyphenylene sulfide resin as the resin component as long as the performance is not impaired. In addition, the reinforcement sheet (3) can contain reinforcement fibers other than the carbon fibers as long as the performance is not impaired.

The reinforcement sheet (3) preferably exhibits a bond strength of 1.5 MPa or more and adherend failure in a bond test in accordance with JSCE-E 545-2018 (Test method for bond of continuous fiber sheets to concrete specified in the 2018 Concrete Standard Specifications established by the Japan Society of Civil Engineers). The reinforcement sheet (3) having such a bond strength can be firmly brought into close contact with surfaces of various outdoor buildings such as a bridge, a road, and a port and is therefore suitable for the method for reinforcing a building according to the present invention.

The reinforcement sheet (3) preferably exhibits a tensile strength of 3400 MPa or more and a tensile modulus of elasticity of 210 GPa or more and 280 GPa or less in a tensile test in accordance with JSCE-E 541-2013 (Tensile test method for continuous fiber sheets specified in the 2013 Concrete Standard Specifications established by the Japan Society of Civil Engineers). The reinforcement sheet (3) having such tensile performance can maintain and improve the strength of various outdoor buildings such as a bridge, a road, and a port.

The reinforcement sheet (3) preferably exhibits a joint strength of 3400 MPa or more and test specimen failure at areas other than a bonding surface in a joint test in accordance with JSCE-E 542-2018 (Joint test method for continuous fiber sheets specified in the 2018 Concrete Standard Specifications established by the Japan Society of Civil Engineers). The reinforcement sheet (3) having such joint performance is placed on the surface of various outdoor buildings such as a bridge, a road, and a port and is capable of resisting pressure, vibration, twisting, and the like, so that these outdoor buildings can be reinforced over a long period of time.

By specifying the above-mentioned tensile strength, tensile modulus of elasticity, joint strength, and bondability, the reinforcement sheet (3) is limited to a reinforcement material for a building such as a bridge or a road, which has a specific balance of tensile strength, tensile modulus of elasticity, joint strength, and bondability. The reinforcement material with such a specific balance is effective in many of Japan's current reinforcement works for buildings such as a bridge and a road.

The reinforcement sheet (3) may be, for example, a sheet that satisfies two or more of the above-mentioned conditions of the bond performance, the tensile performance, and the joint performance. The reinforcement sheet (3) may be a sheet that has all of the above-mentioned bond performance, tensile performance, and joint performance, that is, a sheet that exhibits a bond strength of 1.5 MPa or more and adherend failure in a bond test in accordance with JSCE-E 545-2018 (Test method for bond of continuous fiber sheets to concrete specified in the 2018 Concrete Standard Specifications established by the Japan Society of Civil Engineers), exhibits a tensile strength of 3400 MPa or more and a tensile modulus of elasticity of 210 GPa or more and 280 GPa or less in a tensile test in accordance with JSCE-E 541-2013 (Tensile test method for continuous fiber sheets specified in the 2013 Concrete Standard Specifications established by the Japan Society of Civil Engineers), and exhibits a joint strength of 3400 MPa or more and test specimen failure at areas other than a bonding surface in a joint test in accordance with JSCE-E 542-2018 (Joint test method for continuous fiber sheets specified in the 2018 Concrete Standard Specifications established by the Japan Society of Civil Engineers).

The reinforcement sheet (3) itself exhibits excellent mechanical strength and has high bondability to concrete. The surface of a concrete building covered with the reinforcement sheet (3) is strongly reinforced over a long period of time.

### [Manufacturing method of reinforcement sheet (3)]

The manufacturing method of the reinforcement sheet (3) includes Step 1: a step of manufacturing a prepreg by impregnating carbon fibers with an engineering plastic consisting of one or more selected from a polyphenylene sulfide resin, a polycarbonate, and a polyether ether ketone, and Step 2: a step of hydrophilizing at least one surface of the prepreg. In the manufacturing method of the reinforcement sheet (3), a polyphenylene sulfide resin is preferably used as the engineering plastic.

In the step 1, any known method or equipment that can be used in the manufacture of a prepreg obtained by impregnating fibers with a thermoplastic resin can be used without limitation. In the step 1 of the present invention, both a compression molding method and a roll molding method can be used. For example, a laminated sheet (semi-preg) consisting of carbon fibers that are continuously transported in an aligned state and a heated engineering plastic sheet consisting of one or more selected from a polyphenylene sulfide resin, a polycarbonate, and a polyether ether ketone is manufactured, the semi-preg is passed between rolls and pressed to impregnate the carbon fibers with the engineering plastic, and then sheet-like carbon fibers impregnated with the engineering plastic are cooled and dried to obtain a prepreg which is a raw material for the reinforcement sheet (3).

The number of carbon fiber layers and engineering plastic layers in the semi-preg is not limited. In the step 1 of the present invention, a semi-preg is used in which two surface layers consist of engineering plastic layers, and a total of n carbon fiber layers (n is an integer of 1 or more) and a total of (n+1) engineering plastic layers are alternately laminated. A semi-preg satisfying generally 1 ≤ n ≤ 5 and preferably 1 ≤ n ≤ 3 is used.

In the step 2, at least one surface of the prepreg obtained in the step 1 is hydrophilized preferably by a plasma treatment. The plasma treatment device and plasma treatment conditions are not limited as long as the water contact angle on the one surface is 50 degrees or less, preferably 45 degrees or less, and more preferably 35 degrees or less.

The plasma treatment is typically carried out in such a manner that the prepreg obtained in the step 1 is introduced into a drum type plasma irradiation device or a flat plate type plasma irradiation device, and at least one surface of the prepreg is irradiated with plasma in the device. It is presumed that reactive groups such as a hydroxyl group (-OH) and a carboxyl group (-COOH) are generated on the surface by this plasma treatment. For this reason, the plasma treatment in the present invention can also be regarded as a type of hydrophilization treatment. The obtained reinforcement sheet (3) exhibits high bondability to concrete or an adhesive such as an epoxy-based adhesive.

In a case where a drum type plasma irradiation device is used, the plasma irradiation voltage is generally 1.0 kV or more and 4.0 kV or less, preferably 1.5 kV or more and 3.5 kV or less, and more preferably 1.5 kV or more and 3.0 kV or less. The plasma treatment can be carried out by another method such as a flat plate type plasma irradiation device under conditions that make it possible to obtain equivalent plasma irradiation intensity. It should be noted that the plasma irradiation conditions may be specified by electric power (W).

The reinforcement sheet (3) has at least one surface having a water contact angle of 50° or less. The plasma irradiation conditions in the step 2 are set to the conditions under which the water contact angle of the plasma-irradiated surface is maintained at 50 degrees or less for at least 60 days after the end of plasma irradiation. The conditions under which at least one surface exhibiting a water contact angle of 50 degrees or less can be formed on the reinforcement sheet (3) are set for each type of plasma irradiation device.

### [Method (10)]

The method (10) according to the embodiment of the present invention is a method for reinforcing a building, and includes a step of fixing the reinforcement sheet (3) to the surface of the building (4) through the adhesive (2).

In a case where the reinforcement method according to the embodiment of the present invention is carried out, at the site of work, the adhesive (2) is applied to a surface of a building to be reinforced, and the reinforcement sheet (3) is brought into close contact with the adhesive (2) surface. Preferably, prior to the application of the adhesive, the surface of the building is subjected to surface preparation such as cleaning, polishing, and correction of unevenness. The surface preparation is a step of cleaning, polishing, and curing, which is common in the repair or painting of a building, and is also called "keren".

In the method (10), a step of applying a primer onto the surface of the building that has been subjected to the surface preparation can be omitted. Even in a case where the primer is not used in the method (10), the surface of the building (4) is directly and firmly brought into close contact with the reinforcement sheet (3) through the adhesive (2).

The method of applying the adhesive (2) is not limited as long as it is a method used for repairing a building. Any known tool such as a trowel, a brush, or a roller can be used without limitation. In a case where the reinforcement sheet (3) is brought into close contact with the adhesive surface, the reinforcement sheet (3) is generally pressed with a roller, a brush, a trowel (squeegee), or the like so that no air remains between the adhesive (2) and the sheet. In a case where the reinforcement surface with which the reinforcement sheet (3) is brought into close contact is dried to cure the adhesive (2), the reinforcement sheet (3) firmly bonds to the surface of the building, which reinforces and protects the surface. Therefore, in the reinforcement method according to the embodiment of the present invention, there is no step of impregnating reinforcement fibers with a resin at the site of work. Therefore, the reinforcement method according to the embodiment of the present invention can significantly simplify the work step of the related art method and does not require large equipment or complicated operations at the site of work.

In the actual reinforcement work, after the reinforcement sheet (3) is bonded to the surface of the building, the outermost surface may be further finished with a paint to prevent deterioration, improve water repellency and antifouling properties, and/or for display or aesthetic purposes.

In a case where the reinforcement method according to the embodiment of the present invention is applied to a large area work surface, it is possible to prepare a plurality of reinforcement sheets (3) and bond the reinforcement sheets (3) one after another so that the end portions of the sheets overlap with each other. In addition, a plurality of reinforcement sheets (3) can be laminated in one place depending on the shape or the surface condition of the building. In this case, a laminated sheet in which a plurality of reinforcement sheets (3) are laminated using the above-mentioned adhesive can be prepared in advance, and this laminated sheet can be bonded to the surface to be reinforced at the site of work.

### [Building (4)]

There is no particular limitation on the building (4) to which the material (1) and the method (10) are applied. The building (4) is generally a structure made of concrete or reinforced concrete such as a bridge, a road, or a tunnel. The material (1) is also applied to concrete parts or reinforced concrete parts of various buildings such as a commercial facility, a residence, a warehouse, and a factory. The reinforcing effect and the work period shortening effect by the material (1) and the method (10) are remarkably exhibited, for example, in a bridge floor slab reinforcement work.

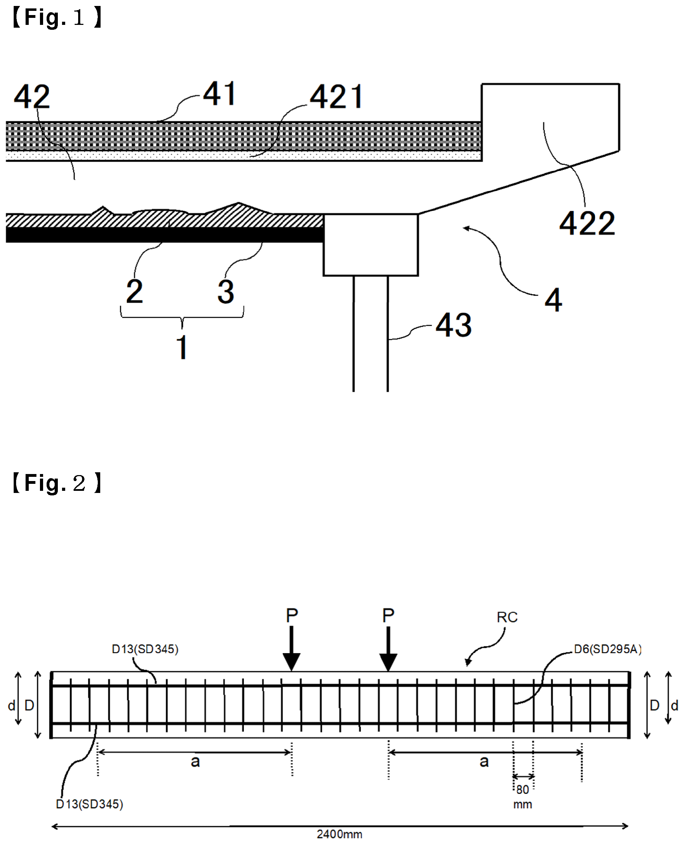

Fig. 1 shows a schematic diagram of an example in which a bridge is repaired using the building reinforcement material according to the embodiment of the present invention. Fig. 1 shows the pavement (41), the floor slab (42), and a girder (43) as structural portions of the bridge (4). The unevenness in the vicinity of the joints of the material (1) is omitted. The floor slab (42) has a waterproof layer (421) and an overhanging portion (422). The actual shape and dimension of each structural portion are exaggerated or omitted. In this example, the material (1) consisting of the reinforcement sheet (3) is fixed to the floor slab (42) of the bridge (4) through the adhesive (2). The floor slab (42) and the material (1) are in direct close contact with each other without any other layer such as a primer layer being interposed therebetween.

### [Examples]

The material (1) and the method (10) according to the embodiment of the present invention were evaluated by the following materials and methods.

### [Material (1-1)]

The material (1-1) is an example of the material (1) according to the embodiment of the present invention. The material (1-1) consists of an adhesive (2-1) which is an example of the adhesive (2) and a reinforcement sheet (3-1) which is an example of the reinforcement sheet (3).

The adhesive (2-1) is a commercially available two-component mixture type epoxy adhesive for civil engineering and construction, which is a combination of an epoxy resin main agent and a polyamide-based curing agent (main component: polyamideamine) at a ratio of 2:1 (weight ratio). Table 1 shows the compressive elastic modulus and the compressive strength in accordance with JIS A 6024 (method A) of the adhesive (2-1).

The reinforcement sheet (3-1) was manufactured by the following method. A commercially available linear polyphenylene sulfide resin not containing a reinforcing agent such as a filler and a commercially available carbon fiber sheet having a basis weight of 200 g/m² were prepared. The molten product of the polyphenylene sulfide resin was jetted from a T-die onto the carbon fiber sheet to manufacture a semi-preg. At this time, the jetting was carried out such that the outermost layer was a polyphenylene sulfide resin layer, the total thickness of the polyphenylene sulfide resin layer was 100 µm, and the total thickness of the carbon fiber layer was 100 µm. This semi-preg was transported on a belt and heated and pressed between rolls to impregnate the carbon fibers with the polyphenylene sulfide resin layer. As a result, a prepreg containing carbon fibers was obtained with a basis weight of carbon fibers of 200 g/m² and a content of carbon fibers of 55% by volume.

One surface of this prepreg was subjected to a vacuum plasma treatment to obtain a reinforcement sheet (3-1). In a case where the water contact angle was periodically measured at five randomly selected points on the plasma-irradiated surface immediately after the plasma irradiation and the values at the five points were averaged, the average value of the water contact angle was maintained at 40 degrees or less up to 180 days after the plasma irradiation.

### [Material (1-2)]

The material (1-2) is a comparative product of the material (1) according to the embodiment of the present invention. The material (1-2) consists of an adhesive (2-2) which is a control product of the adhesive (2) and a reinforcement sheet (3-1) which is an example of a reinforcement sheet (3).

The adhesive (2-2) is a two-component adhesive in which an epoxy resin main agent, a polyamine-based curing agent, and a polythiol-based curing agent (all manufactured by Cemedine Co., Ltd.) are combined at a ratio of 5:2:1 (weight ratio). Table 1 shows the compressive elastic modulus and the compressive strength in accordance with JIS A 6024 (method A) of the adhesive (2-2). The compressive elastic modulus of the adhesive (2-2) exceeds the range required for the adhesive (2) of the present invention.

**[Table 1]**

| | Adhesive (2-1) | Adhesive (2-2) Control product |
|---|---|---|
| Main agent | Epoxy resin | Epoxy resin |
| Curing agent | Polyamide-based | Polyamine-based |
| JIS A 6024 Compressive elastic modulus (MPa) | 42 | 1228 |
| JIS A 6024 Compressive strength (MPa) | 40 | 59 |

### [Material (1-3)]

The material (1-3) is a comparative product of the material (1) according to the embodiment of the present invention. The material (1-3) consists of products manufactured by NIPPON STEEL Chemical & Material Co., Ltd.: high-strength carbon fibers "Tow Sheet FTS-C1-30", a two-component room temperature-curing epoxy resin primer for spring and autumn "FP-NS", an unevenness correction agent for summer "FE-Z", and an impregnating adhesive resin for spring and autumn "FR-E3P".

Table 2 shows the configurations of the material (1-1), the material (1-2), and the material (1-3).

**[Table 2]**

| Material | Configuration | |
|---|---|---|
| | Adhesive (2) | Reinforcement sheet (3) |
| 1-1 | 2-1 | 3-1 |
| 1-2 (comparative product) | 2-2 (control product) | 3-1 |
| 1-3 (comparative product) | Products manufactured by NIPPON STEEL Chemical & Material Co., Ltd.: | |
| | High-strength carbon fibers Primer | |
| | Unevenness correction agent Impregnating adhesive resin | |

### [Example 1, Comparative Example 1, and Work Time]

The time required for the reinforcement material to be brought into close contact with a reinforcement target object without any gaps therebetween was compared between an example of the method (10) according to the embodiment of the present invention and a comparative method.

Two concrete plates measuring 1.5 meters long and 1.5 meters wide were prepared. The concrete plate was installed at a height of 1.7 meters from the ground.

In Example 1, a method (10-1) which is an example of the method (10) according to the embodiment of the present invention was adopted. In the method (10-1), the material (1-1) was applied to one of the concrete plates. The procedure of the work is shown in Table 3. In Example 1, the material (1-1) was soft and had good elongation, so the worker determined that the thin material (1-1) could be directly attached to the concrete plate. Therefore, in Example 1, the application of a primer and the correction of unevenness were not carried out, and the adhesive (2-1) was directly applied to the concrete plate subjected to the keren, and the reinforcement sheet (3-1) was then placed thereon.

In Comparative Example 1, a method (10-2) which does not correspond to the method (10) according to the embodiment of the present invention was adopted. In Comparative Example 1, the material (1-3) was applied to the other of the concrete plates by the method specified by NIPPON STEEL Chemical & Material Co., Ltd.

In both Example 1 and Comparative Example 1, the work was finished at a time when the material (1-1) or the material (1-3) was brought into close contact with the surface of the concrete plate without any defects in appearance and without any gaps therebetween. Table 3 shows the time from the start to the end of the work (work time).

**[Table 3]**

| | | Example 1 | Comparative Example 1 |
|---|---|---|---|
| | | Method (10-1) | Method (10-2) Control |
| | | Material (1-1) | Material (1-3) Control |
| Work and required time | Keren and curing (min) | 60 | 60 |
| | Application of primer (min) | - | 17 |
| | Correction of unevenness (min) | - | 23 |
| | Application of adhesive and attachment of reinforcement sheet (min) | 63 | 120 |
| Work time (min) | | 123 | 220 |

The work time was 123 minutes in Example 1 and 220 minutes in Comparative Example 1. At an actual site of work, the worker finishes the work at a time when the reinforcement material is brought into close contact with the surface of the concrete plate without any gaps therebetween. Therefore, it is expected that the work time at the site of work can be significantly shortened by the method (10-1) according to the embodiment of the present invention.

### [RC member]

As the reinforcement target object of the materials (1-1), (1-2), and (1-3), a rod-shaped member made of reinforced concrete (hereinafter, referred to as an "RC member") was manufactured. The formulation of the concrete is shown in Table 4.

**[Table 4]**

| | | |
|---|---|---|
| Maximum dimension of coarse aggregate (m m) | | 20 |
| Range of slump (cm) | | 8.0±2.5 |
| Range of air amount (%) | | 5.5±1.5 |
| Water-cement ratio w/c (%) | | 50 |
| Fine aggregate ratio S/a (%) | | 41.5 |
| Unit amount (kg/ m³) | Water W | 150 |
| | Cement C | 300 |
| | Fine aggregate S | 744 |
| | Coarse aggregate G | 1065 |
| | Admixture (high-perfo rmance water reducing agent) | 1.8 |
| | Admixture (AE agent) | 0.015 |

The raw materials listed in Table 4 are as follows.
· Cement: ordinary Portland cement
· Fine aggregate: natural land sand
· Coarse aggregate: natural land gravel
· High-performance water reducing agent: trade name " MASTER GLENIUM ACE 390"
· AE agent: trade name "MASTER AIR 202"

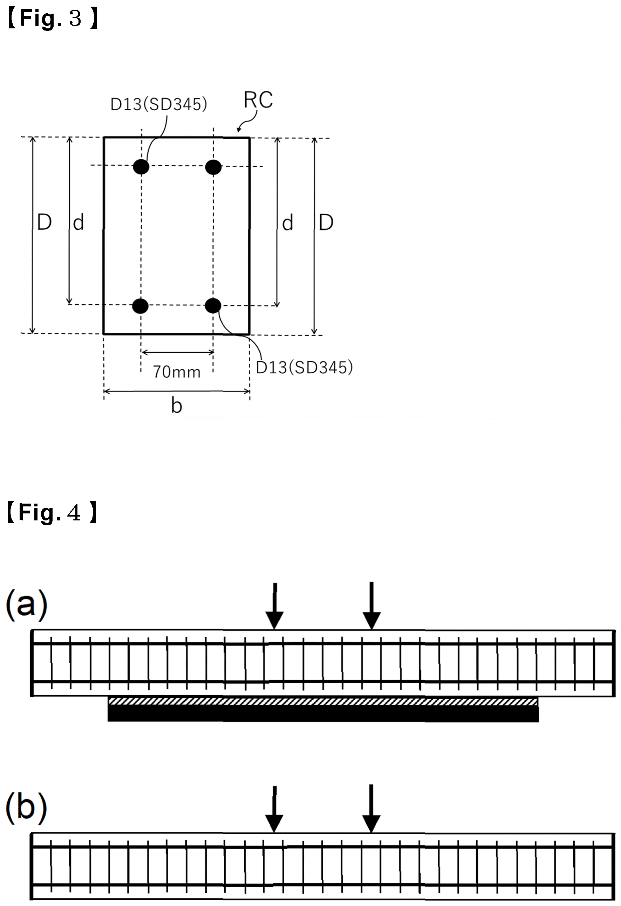

The structure of the RC member is shown in Fig. 2 and Fig. 3. Fig. 2 is a side view, with a left-right direction of the paper being a longitudinal direction. Arrows P show n in Fig. 2 indicate two-point concentrated loads in a load ing test. In this loading test, a shear span (a) is designe d to be 800 mm and a shear span ratio is designed to be 5.00. Steel plates with a thickness of 9 mm are fixed to both en ds of the RC member. Fig. 3 is a cross-sectional view. The black circle shown in Fig. 3 is a cross section of reinforc ing steel bar D13 (SD345). Fig. 2 and Fig. 3 are schematic views in which some of actual shape and dimension are exagg erated or omitted.

With regard to the RC member, the RC member has a length of 2400 mm, a cross-sectional height (D) of 200 mm, a cross-sectional width (b) of 150 mm, and an effective height (d) of 160 mm.

In the RC member, two reinforcing steel bars D13 were disposed as tensile reinforcing steel bars. The maximum disposition interval of the tensile reinforcing steel bars was set to 70 mm. The tensile reinforcing steel bar exhibits a yield point of 370 N/mm² and a tensile strength of 486 N/mm². The covering of the tensile reinforcing steel bar (core covering: D - d) is 40 mm.

In the RC member, two reinforcing steel bars D13 were disposed as compressive reinforcing steel bars. The compressive reinforcing steel bar exhibits a yield point of 370 N/mm² and a tensile strength of 486 N/mm².

In the RC member, reinforcing steel bars D6 were disposed as stirrups at intervals of 80 mm (half the length of d). The reinforcing steel bar D6 exhibits a yield point of 330 N/mm² and a tensile strength of 508 N/mm².

### [Example 2, Comparative Example 2a, and Comparative Example 2b, Reinforcement with single layer of material]

In Example 2, the reinforcing effect of the RC member with a single layer of the material (1-1) was evaluated. The adhesive (2-1) was applied to the RC member, the reinforcement sheet (3-1) was attached to an open surface of the adhesive (2-1), and an open surface of the reinforcement sheet (3-1) was pressed with a spatula and a roller to bring the entire material (1-1) into close contact with the concrete surface, so that no air was trapped between the RC member, the adhesive (2-1), and the reinforcement sheet (3-1). In Example 2, the material (1) was brought into close contact without any joints. After curing for about one week, a loading test was carried out.

Fig. 4(a) shows a state of the loading test of Example 2. In Fig. 4, the dimension and shape relationship between the material and the RC member is exaggerated. The adhesive layer and the reinforcement sheet are brought into close contact with the underside of the RC member in that order. The concrete was pressed from the topside of the RC member. The arrows shown in Fig. 4 indicate the directions of the two-point concentrated loads. The applied load was increased, and the load at the time when the RC member was broken (maximum load) (kN) was measured. The results are shown in Table 5.

In Comparative Example 2a, the material (1-1) in Example 2 was changed to the material (1-3), and the material (1-3) was applied to the RC member using the above-mentioned method (10-2). The loading test was carried out on the reinforced RC member in the same manner as in Example 2. The relationship among the RC member, the material (1-3), and the loading position in the loading test of Comparative Example 2a is the same as the positional relationship in Example 2 shown in Fig. 4(a). The results are shown in Table 5.

In Comparative Example 2b, a loading test was carried out on a non-reinforced RC member to measure the maximum load (kN). Fig. 4(b) shows a state of the loading test of Comparative Example 2b. The relationship between the RC member and the loading position is the same as that in Example 2 and Comparative Example 2a. The results are shown in Table 5.

The maximum load is increased in Comparative Example 2a as compared with the case of no reinforcement (Comparative Example 2b), so the reinforcing effect is also observed in Comparative Example 2a. However, the maximum load of Example 2 is significantly increased as compared with the value of Comparative Example 2b, so it can be said that the reinforcing effect of Example 2 is extremely high. Comparing the results of Example 2 with the results of Comparative Example 2a and Comparative Example 2b, it can be seen that the material (1) exhibiting an excellent reinforcing effect was obtained by combining the specific adhesive (2) with the specific reinforcement sheet (3).

### [Example 3 and Comparative Example 3, Reinforcement with two layers of material]

In Example 3, the step of attaching the material (1-1) in Example 2 was repeated twice to reinforce the RC member with two layers of the material (1-1) without joint portions. In Comparative Example 3, the material (1-1) in Example 2 was changed to the material (1-3), and the work and the test were carried out in the same manner as in Example 3.

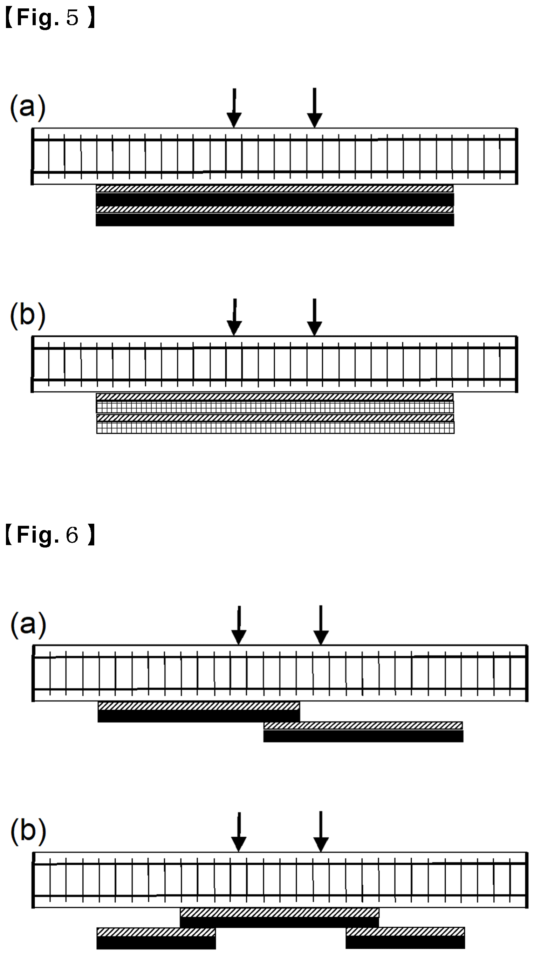

Fig. 5(a) shows a state of the loading test of Example 3. Fig. 5(b) shows a state of the loading test of Comparative Example 3. In Fig. 5, the dimension and shape relationship between the material and the RC member is exaggerated. The adhesive layer and the reinforcement sheet are alternately disposed on the underside of the RC member in this order to form a total of four layers that are brought into close contact with each other. In the loading test, the concrete was pressed from the topside of the RC member. The arrows shown in Fig. 5 indicate the directions of the two-point concentrated loads. The relationship among the RC member, the material, and the loading position is the same in Example 3 and Comparative Example 3. The load at the time when the RC member was broken (maximum load) (kN) was measured by increasing the applied load. The results are shown in Table 5.

The maximum load of Comparative Example 3 is increased by approximately 10% from the value of Comparative Example 2a. It can be seen that Comparative Example 3, in which the reinforcement was made with two layers of the material (1-3), has a higher reinforcing effect than Comparative Example 2a, in which the reinforcement was made with single layer of the material (1-3). On the other hand, the maximum load of Example 3, in which the reinforcement was made with the two layers of the material (1-1), is increased by approximately 24% from the value of Example 2, in which the reinforcement was made with single layer of the material (1-1). It can be seen that the reinforcing effect is significantly increased in Example 3. Such results suggest that the external force acting on the RC member is absorbed and dispersed between the layers of the material (1) according to the embodiment of the present invention. By increasing the number of layers of the material (1) according to the embodiment of the present invention applied to a building, it is possible to expect an increase in the reinforcing effect that cannot be expected with the related art products.

### [Example 4, Comparative Example 4, Example 5, and Comparative Example 5, Reinforcement with jointed material]

In Example 4, the material (1-1) was used to reinforce the RC member by jointing. The operation of attaching the material (1-1) was the same as in Example 2 and Example 3. In Example 4, the joint portion is located in the center of the RC member. In Example 4, the loading test was carried out in the positional relationship shown in Fig. 6(a). In the loading test of Example 4, the RC member is pressed from directly above the joint portion. The results of the loading test are shown in Table 5.

In Comparative Example 4, the material (1-1) in Example 4 was changed to the material (1-2). Other than the material, the reinforcement and the test were carried out in the same manner as in Example 4. The results of the loading test are shown in Table 5.

In Example 5, the RC member was reinforced by changing the position of the joint portion in Example 4. In Example 5, the joint straddles the center of the RC member. In Example 5, the loading test was carried out in the positional relationship shown in Fig. 6(b). In the loading test of Example 5, a load is applied to the end portion of the joint. The results of the loading test are shown in Table 5.

In general, it is considered that the material layer is easily broken at a discontinuous portion such as the joint portion, and the reinforcing effect is impaired by the joint of the reinforcement material. However, as shown in Table 5, a reinforcing effect equal to or greater than that of Example 2 can be obtained in both of Example 4 and Example 5. From this, it can be seen that the material (1-1) exhibits a high reinforcing effect regardless of the presence or absence of the joints or the position of the joints, and that the material (1) according to the embodiment of the present invention overcomes the weakness of the joints that was a problem in the reinforcement materials in the related art.

On the other hand, in Comparative Example 4, only a slight reinforcing effect is obtained. Although a reinforcing effect is also observed in Comparative Example 5, the effect is lower than that of Examples 2, 4, and 5. It is presumed that, in Comparative Example 4 and Comparative Example 5, the reinforcing effect of the material (1-2) is impaired due to the joints. In addition, since there is a large difference between the maximum loads of Comparative Example 4 and Comparative Example 5, it is considered that the building reinforced with the material (1-2) has a bias in strength depending on the position and distribution of the joints. Although the reinforcement sheet is common to the material (1-1) and the material (1-2), there is a large difference in the reinforcing effect. This proves that the excellent reinforcing effect of the material (1) according to the embodiment of the present invention is achieved by the combination of the adhesive (2) and the reinforcement sheet (3).

**[Table 5]**

| | Number of layers of material | Material | Joint | Maximum load (kN) |
|---|---|---|---|---|
| Example 2 | 1 | 1-1 | Absence | 66 |
| Comparative Example 2a | 1 | 1-3 Comparative product | Absence | 60 |
| Comparative Example 2b | 0 (no reinforcement) | - | - | 38 |
| Example 3 | 2 | 1-1 | Absence | 82 |
| Comparative Example 3 | 2 | 1-3 Comparative product | Absence | 66 |
| Example 4 | 1 | 1-1 | Presence (loaded in the center) | 66 |
| Comparative Example 4 | 1 | 1-2 | Presence (loaded in the center) | 49 |
| Example 5 | 1 | 1-1 | Presence (loaded on the end portion) | 68 |
| Comparative Example 5 | 1 | 1-2 | Presence (loaded on the end portion) | 60 |

The material (1) according to the embodiment of the present invention is a combination of the adhesive (2) having large elongation that was not anticipated in an adhesive for reinforcing a building in the related art and the reinforcement sheet (3) whose surface is highly hydrophilic. The material (1) has a strong resistance to destructive forces such as pressing force regardless of the reinforcement with single layer of the material (1) or the reinforcement with two layers of the material (1), or regardless of the joint portion or the non-joint portion, and exhibits a significantly improved reinforcing effect as compared with a carbon fiber-based material in the related art. It is particularly noteworthy that material (1) exhibits a strong reinforcing effect even at the joint portions. The material (1) according to the embodiment of the present invention can solve a problem of a decrease in the reinforcing effect at the joint portions, which was unavoidable with the reinforcement materials in the related art.

Although the behavior and the reinforcement mechanism of the material (1) according to the embodiment of the present invention have not yet been elucidated in detail, it is presumed that the material (1) as a composite consisting of the adhesive (2) and the reinforcement sheet (3) has a high ability to absorb and disperse external forces due to pressing or twisting. For example, since the adhesive (2) layer is easily deformed in response to external forces, it is considered that the external forces concentrated on the joint portions of the material (1) are dispersed to the non-joint portions, making the material (1) less likely to break.

In the method (10) according to the embodiment of the present invention, the material (1) having a high bond strength to the surface to be repaired is used, so that it is possible to omit the primer application step, which has been essential in the repair work in the related art. In the method (10), the adhesive (2) having higher flexibility and elongation than the adhesive generally used for repairing a building is used, so that the material (1) can be more simply attached to conform to the surface shape of the building made of reinforced concrete. Therefore, the method (10) can shorten the work period of the reinforcement and repair work of buildings and can reduce the cost of the reinforcement and repair work.

The material (1) and the method (10) according to the embodiment of the present invention are useful for repair and reinforcement businesses of buildings in which a shortage of workers or concentration of works is a problem. The material (1) and the method (10) according to the embodiment of the present invention generally contribute to the repair and reinforcement of a building made of reinforced concrete, and typically contribute to the repair and reinforcement of a bridge, a road, a tunnel, or the like, which requires works on a large scale or at a large number of sites.

### [Description of Reference Numerals and Signs]

- 1:: material
- 2:: adhesive
- 3:: reinforcement sheet
- 4:: part of bridge
- 41:: pavement
- 42:: floor slab
- 421:: waterproof layer
- 422:: overhanging portion
- 43:: girder

## Claims

1. A material (1) comprising:
an adhesive (2); and
a reinforcement sheet (3), and used for reinforcing a building (4),
wherein the adhesive (2) is a two-component epoxy-based adhesive having a compressive elastic modulus in accordance with JIS A 6024 of 500 MPa or less,
the reinforcement sheet (3) consists of carbon fibers and an engineering plastic consisting of one or more selected from a polyphenylene sulfide resin, a polycarbonate, and a polyether ether ketone, and
at least one surface of the reinforcement sheet (3) exhibits a water contact angle of 50 degrees or less.

2. The material (1) according to claim 1, wherein a compressive strength in accordance with JIS A 6024 (method A) of the adhesive (2) is 70 MPa or less.

3. The material (1) according to claim 1, wherein the adhesive (2) contains a polyamide-based curing agent.

4. The material (1) according to claim 1, wherein the reinforcement sheet (3) consists of a polyphenylene sulfide resin and carbon fibers having a basis weight of 150 g/m² or more, and at least one surface of the reinforcement sheet (3) is hydrophilized by a plasma treatment such that a water contact angle of 50 degrees or less is exhibited.

5. The material (1) according to claim 1, wherein the building (4) is a bridge.

6. A method (10) for reinforcing a building, the method comprising:
a step of fixing a reinforcement sheet (3) to a surface of a building (4) through an adhesive (2),
wherein the adhesive (2) is a two-component epoxy-based adhesive having a compressive elastic modulus in accordance with JIS A 6024 of 500 MPa or less,
the reinforcement sheet (3) consists of carbon fibers and an engineering plastic consisting of one or more selected from a polyphenylene sulfide resin, a polycarbonate, and a polyether ether ketone, and
at least one surface of the reinforcement sheet (3) exhibits a water contact angle of 50 degrees or less.

7. The method (10) according to claim 6, wherein a compressive strength in accordance with JIS A 6024 (method A) of the adhesive (2) is 70 MPa or less.

8. The method (10) according to claim 6, wherein the adhesive (2) contains a polyamide-based curing agent.

9. The method (10) according to claim 6, wherein the reinforcement sheet (3) consists of a polyphenylene sulfide resin and carbon fibers having a basis weight of 150 g/m² or more, and at least one surface of the reinforcement sheet (3) is hydrophilized by a plasma treatment such that a water contact angle of 50 degrees or less is exhibited.

10. The method (10) according to claim 6, wherein the building (4) is a bridge.
